# EUROPEAN PATENT APPLICATION

(11) **EP 3 448 089 A1**
(43) Date of publication of application: **27.02.2019**
(21) Application number: 16898941.6
(22) Date of filing: 20.04.2016
(51) Int. Cl.: H04W 48/12

(54) **METHOD OF PROCESSING DEDICATED CORE NETWORK MIGRATION, EQUIPMENT, AND SYSTEM**

(71) Applicant: Huawei Technologies Co., Ltd., Longgang District Shenzhen, Guangdong 518129 (CN)
(72) Inventor: SHU, Lin, Shenzhen Guangdong 518129 (CN); WANG, Yuan, Shenzhen Guangdong 518129 (CN); ZHU, Fenqin, Shenzhen Guangdong 518129 (CN)
(74) Representative: Gill Jennings & Every LLP
(86) International application number: PCT/CN2016/079712
(87) International publication number: WO 2017/181353

(57) **Abstract**

The present invention provides a method, device, and system for processing migration between dedicated core networks. The method includes: when a subscribed usage type of UE changes, obtaining, by a mobility management network element, the subscribed usage type of the UE; if dedicated core network assistance information of the UE does not match a dedicated core network served by the mobility management network element, sending, by the mobility management network element, a request message to the UE; and sending, by the UE, an access request message based on the request message, and sending, to a serving base station of the UE, the dedicated core network assistance information in an RRC connection establishment request message triggered by the access request message, so that the base station selects a dedicated core network corresponding to the dedicated core network assistance information for the UE. In technical solutions provided in the present invention, a mobility management network element does not need to initiate a NAS redirection procedure, so that unnecessary redirection signaling overheads are saved, and isolation between different DCNs is ensured.

## Description

### TECHNICAL FIELD

The present invention relates to communications technologies, and in particular, to a method, device, and system for processing migration between dedicated core networks.

### BACKGROUND

With evolution of a mobile communications network and continuous emergence of a large quantity of new applications, different users in different application fields gradually develop different communication characteristics, thereby generating different mobile communication types and corresponding terminal types, for example, machine type communication (Machine Type Communication, MTC for short), mobile virtual network communication, and public security communication. From a perspective of a core network (Core Network, CN for short) side, different terminal types have different communication requirements: different optional characteristics to support, different service characteristic requirements, different availability requirements, different congestion management mechanisms, and the like. With a sharp increase in a quantity of different terminal types, an operator needs to deploy different dedicated core networks (Dedicated Core Network, DCN for short) for different terminal types. Specifically, the operator allocates a usage type (usage type) of user equipment (User Equipment, UE) to terminal types with a same communication characteristic in a manner of subscription, and deploys a dedicated DCN network element for the terminal types. Therefore, terminals of a same usage type register with the deployed DCN network element dedicated to the terminals, and the operator easily performs targeted management and maintenance on different types of terminals, to implement dedicated use of a dedicated network. This improves mobility management efficiency and session management efficiency for access of massive terminals, and reduces network maintenance costs.

When the DCN network element that currently serves the UE cannot continuously serve the UE because of a change of the subscribed usage type of the UE on a network side, the UE needs to be migrated to a DCN network element that can serve the UE whose usage type is updated, to meet a requirement of the operator to perform dedicated network management on the terminals of different usage types.

In the prior art, migration between dedicated networks is implemented by redirecting the UE on the network side. Specifically, when the subscribed usage type of the UE on the network side changes, the DCN network element requests the UE to re-initiate an access procedure, initiates a non-access stratum (Non-Access Stratum, NAS for short) redirection procedure in the access procedure initiated by the UE, and redirects the UE to a DCN network element that can support the usage type of the UE.

The prior art has the following disadvantages:, in the existing method for processing migration between dedicated core networks, the DCN network element needs to initiate the NAS redirection procedure to redirect the UE from one DCN network element to another DCN network element that can support an updated usage type of the UE, thereby generating unnecessary signaling overheads. In addition, redirecting the UE between different DCNs also affects isolation between different DCNs deployed by the operator. This is not conducive to evolution to a 5G network slicing technology.

### SUMMARY

To overcome the foregoing disadvantages of the prior art, the present invention provides a method, device, and system for processing migration between dedicated core networks, to save unnecessary redirection signaling overheads and ensure isolation between different DCNs.

According to a first aspect, an embodiment of the present invention provides a method for processing migration between dedicated core networks, including:
obtaining, by a mobility management network element, a subscribed usage type of user equipment UE;
determining, by the mobility management network element, dedicated core network assistance information of the UE based on the subscribed usage type of the UE; and
if the dedicated core network assistance information of the UE does not match a dedicated core network served by the mobility management network element, sending, by the mobility management network element, a request message to the UE, where the request message is used to instruct the UE to re-initiate an access request, and the request message carries the dedicated core network assistance information of the UE.

In the method for processing migration between dedicated core networks in the first aspect, when the subscribed usage type of the UE changes, the mobility management network element obtains the subscribed usage type of the UE, and determines the dedicated core network assistance information of the UE based on the usage type. Then, when requesting the UE to re-initiate an access procedure, the mobility management network element sends the dedicated core network assistance information to the UE. In this way, the UE may send, to a base station, the dedicated core network assistance information in an RRC connection establishment request message triggered when the UE initiates the access procedure. The base station can select, based on the dedicated core network assistance information, a dedicated core network corresponding to the dedicated core network assistance information for the UE and directly migrate the UE to a mobility management network element that can serve UE. As a result, a mobility management network element does not need to initiate a NAS redirection procedure, unnecessary redirection signaling overheads are saved, and isolation between different DCNs is ensured.

In a possible implementation of the first aspect, the determining dedicated core network assistance information of the UE based on the subscribed usage type of the UE includes:
determining, by the mobility management network element, the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

In a possible implementation of the first aspect, if the UE is in idle mode, before the sending, by the mobility management network element, a request message to the UE, the method further includes:
sending, by the mobility management network element, a paging message to the UE, so that the UE changes to connected mode.

In a possible implementation of the first aspect, the sending, by the mobility management network element, a request message to the UE specifically includes:
sending, by the mobility management network element, a temporary identity reallocation request message to the UE, where the temporary identity reallocation request message carries a non-broadcast location area identifier and the dedicated core network assistance information of the UE, and the non-broadcast location area identifier is used to instruct the UE to re-initiate the access request.

In a possible implementation of the first aspect, the sending, by the mobility management network element, a request message to the UE specifically includes:
sending, by the mobility management network element, a connection release command message to a serving base station of the UE, where the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

In a possible implementation of the first aspect, the sending, by the mobility management network element, a request message to the UE specifically includes:
sending, by the mobility management network element, a detach request message to the UE, where the detach request message carries a detach type "re-attach" and the dedicated core network assistance information of the UE, and the detach type "re-attach" is used to instruct the UE to re-initiate the access request.

In a possible implementation of the first aspect, the access request re-initiated by the UE includes an attach request or a location update request.

In a possible implementation of the first aspect, the dedicated core network assistance information of the UE includes a dedicated core network type of the mobility management network element and/or the subscribed usage type of the UE.

According to a second aspect, an embodiment of the present invention provides a method for processing migration between dedicated core networks, including:
receiving, by user equipment UE, a request message sent by a mobility management network element, where the request message is used to instruct the UE to re-initiate an access request, and the request message carries dedicated core network assistance information determined by the mobility management network element for the UE; and
sending, by the UE, an access request message based on the request message, and sending, to a serving base station of the UE, the dedicated core network assistance information in a radio resource control RRC connection establishment request message triggered by the access request message, where the dedicated core network assistance information is used by the base station to select a dedicated core network corresponding to the dedicated core network assistance information for the UE.

In a possible implementation of the second aspect, the method further includes: saving, by the UE, the dedicated core network assistance information, and associating the dedicated core network assistance information with a serving network of the UE.

In a possible implementation of the second aspect, the dedicated core network assistance information is determined by the mobility management network element based on a subscribed usage type of the UE and at least one of the following information: a mapping relationship that is configured by an operator and that is between a usage type of the UE and a dedicated core network, a locally configured operator policy, or context information of the UE.

In a possible implementation of the second aspect, if the UE is in idle mode, before the receiving, by UE, a request message sent by a mobility management network element, the method further includes:
receiving, by the UE, a paging message sent by the mobility management network element, and sending a paging response message to connect to the mobility management network element.

In a possible implementation of the second aspect, the receiving, by UE, a request message sent by a mobility management network element specifically includes:
receiving, by the UE, a temporary identity reallocation request message sent by the mobility management network element, where the temporary identity reallocation request message carries a non-broadcast location area identifier and the dedicated core network assistance information of the UE, and the non-broadcast location area identifier is used to instruct the UE to re-initiate the access request.

In a possible implementation of the second aspect, the receiving, by UE, a request message sent by a mobility management network element specifically includes:
receiving, by the UE, a radio resource control RRC connection release message sent by the base station, where the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

In a possible implementation of the second aspect, the receiving, by UE, a request message sent by a mobility management network element specifically includes:
receiving, by the UE, a detach request message sent by the mobility management network element, where the detach request message carries a detach type "re-attach" and the dedicated core network assistance information of the UE, and the detach type "re-attach" is used to instruct the UE to re-initiate the access request.

In a possible implementation of the second aspect, the access request message includes an attach request or a location update request.

In a possible implementation of the second aspect, the dedicated core network assistance information of the UE is a dedicated core network type of the mobility management network element or the subscribed usage type of the UE.

For beneficial effects of the communication method provided in the second aspect, refer to the beneficial effects described in the first aspect. Details are not described herein again.

According to a third aspect, an embodiment of the present invention provides a mobility management network element, including:
an obtaining module, configured to obtain a subscribed usage type of user equipment UE;
a determining module, configured to determine dedicated core network assistance information of the UE based on the subscribed usage type of the UE; and
a sending module, configured to: if the dedicated core network assistance information of the UE does not match a dedicated core network served by the mobility management network element, send a request message to the UE, where the request message is used to instruct the UE to re-initiate an access request, and the request message carries the dedicated core network assistance information of the UE.

In a possible implementation of the third aspect, the determining module is specifically configured to:
determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

In a possible implementation of the third aspect, the sending module is further configured to: if the UE is in idle mode, before sending the request message to the UE, send a paging message to the UE, so that the UE changes to connected mode.

In a possible implementation of the third aspect, the sending module is specifically configured to:
send a temporary identity reallocation request message to the UE, where the temporary identity reallocation request message carries a non-broadcast location area identifier and the dedicated core network assistance information of the UE, and the non-broadcast location area identifier is used to instruct the UE to re-initiate the access request.

In a possible implementation of the third aspect, the sending module is specifically configured to:
send a connection release command message to a serving base station of the UE, where the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

In a possible implementation of the third aspect, the sending module is specifically configured to:
send a detach request message to the UE, where the detach request message carries a detach type "re-attach" and the dedicated core network assistance information of the UE, and the detach type "re-attach" is used to instruct the UE to re-initiate the access request.

In a possible implementation of the third aspect, the access request re-initiated by the UE includes an attach request or a location update request.

In a possible implementation of the third aspect, the dedicated core network assistance information of the UE includes a dedicated core network type of the mobility management network element and/or the subscribed usage type of the UE.

For beneficial effects of the mobility management network element provided in the third aspect, refer to the beneficial effects described in the first aspect. Details are not described herein again.

According to a fourth aspect, an embodiment of the present invention provides user equipment UE, including:
a receiving module, configured to receive a request message sent by a mobility management network element, where the request message is used to instruct the UE to re-initiate an access request, and the request message carries dedicated core network assistance information determined by the mobility management network element for the UE; and
a sending module, configured to: send an access request message based on the request message, and send, to a serving base station of the UE, the dedicated core network assistance information in a radio resource control RRC connection establishment request message triggered by the access request message, where the dedicated core network assistance information is used by the base station to select a dedicated core network corresponding to the dedicated core network assistance information for the UE.

In a possible implementation of the fourth aspect, the UE further includes:
a storage module, configured to: save the dedicated core network assistance information, and associate the dedicated core network assistance information with a serving network of the UE.

In a possible implementation of the fourth aspect, the dedicated core network assistance information is determined by the mobility management network element based on a subscribed usage type of the UE and at least one of the following information: a mapping relationship that is configured by an operator and that is between a usage type of the UE and a dedicated core network, a locally configured operator policy, or context information of the UE.

In a possible implementation of the fourth aspect, the receiving module is further configured to:
receive a paging message sent by the mobility management network element, and send a paging response message by using the sending module to connect to the mobility management network element.

In a possible implementation of the fourth aspect, the receiving module is specifically configured to:
receive a temporary identity reallocation request message sent by the mobility management network element, where the temporary identity reallocation request message carries a non-broadcast location area identifier and the dedicated core network assistance information of the UE, and the non-broadcast location area identifier is used to instruct the UE to re-initiate the access request.

In a possible implementation of the fourth aspect, the receiving module is specifically configured to:
receive a radio resource control RRC connection release message sent by the base station, where the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

In a possible implementation of the fourth aspect, the receiving module is specifically configured to:
receive a detach request message sent by the mobility management network element, where the detach request message carries a detach type "re-attach" and the dedicated core network assistance information of the UE, and the detach type "re-attach" is used to instruct the UE to re-initiate the access request.

In a possible implementation of the fourth aspect, the access request message includes an attach request or a location update request.

In a possible implementation of the fourth aspect, the dedicated core network assistance information of the UE is a dedicated core network type of the mobility management network element or the subscribed usage type of the UE.

For beneficial effects of the UE provided in the fourth aspect, refer to the beneficial effects described in the first aspect. Details are not described herein again.

According to a fifth aspect, an embodiment of the present invention provides a mobility management network element, including:
a processor, configured to: obtain a subscribed usage type of user equipment UE; and determine dedicated core network assistance information of the UE based on the subscribed usage type of the UE; and
a transmitter, configured to: if the dedicated core network assistance information of the UE does not match a dedicated core network served by the mobility management network element, send a request message to the UE, where the request message is used to instruct the UE to re-initiate an access request, and the request message carries the dedicated core network assistance information of the UE.

In a possible implementation of the fifth aspect, the processor is specifically configured to:
determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

In a possible implementation of the fifth aspect, the transmitter is further configured to: if the UE is in idle mode, before sending the request message to the UE, send a paging message to the UE, so that the UE changes to connected mode.

In a possible implementation of the fifth aspect, the transmitter is specifically configured to:
send a temporary identity reallocation request message to the UE, where the temporary identity reallocation request message carries a non-broadcast location area identifier and the dedicated core network assistance information of the UE, and the non-broadcast location area identifier is used to instruct the UE to re-initiate the access request.

In a possible implementation of the fifth aspect, the transmitter is specifically configured to:
send a connection release command message to a serving base station of the UE, where the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

In a possible implementation of the fifth aspect, the transmitter is specifically configured to:
send a detach request message to the UE, where the detach request message carries a detach type "re-attach" and the dedicated core network assistance information of the UE, and the detach type "re-attach" is used to instruct the UE to re-initiate the access request.

In a possible implementation of the fifth aspect, the access request re-initiated by the UE includes an attach request or a location update request.

In a possible implementation of the fifth aspect, the dedicated core network assistance information of the UE includes a dedicated core network type of the mobility management network element and/or the subscribed usage type of the UE.

For beneficial effects of the mobility management network element provided in the fifth aspect, refer to the beneficial effects described in the first aspect. Details are not described herein again.

According to a sixth aspect, an embodiment of the present invention provides user equipment UE, including:
a receiver, configured to receive a request message sent by a mobility management network element, where the request message is used to instruct the UE to re-initiate an access request, and the request message carries dedicated core network assistance information determined by the mobility management network element for the UE; and
a transmitter, configured to: send an access request message based on the request message, and send, to a serving base station of the UE, the dedicated core network assistance information in a radio resource control RRC connection establishment request message triggered by the access request message, where the dedicated core network assistance information is used by the base station to select a dedicated core network corresponding to the dedicated core network assistance information for the UE.

In a possible implementation of the sixth aspect, the UE further includes a memory and a processor; where the memory is configured to save the dedicated core network assistance information; and the processor is configured to associate the dedicated core network assistance information with a serving network of the UE.

In a possible implementation of the sixth aspect, the dedicated core network assistance information is determined by the mobility management network element based on a subscribed usage type of the UE and at least one of the following information: a mapping relationship that is configured by an operator and that is between a usage type of the UE and a dedicated core network, a locally configured operator policy, or context information of the UE.

In a possible implementation of the sixth aspect, the receiver is further configured to:
receive a paging message sent by the mobility management network element, and send a paging response message by using the transmitter to connect to the mobility management network element.

In a possible implementation of the sixth aspect, the receiver is specifically configured to:
receive a temporary identity reallocation request message sent by the mobility management network element, where the temporary identity reallocation request message carries a non-broadcast location area identifier and the dedicated core network assistance information of the UE, and the non-broadcast location area identifier is used to instruct the UE to re-initiate the access request.

In a possible implementation of the sixth aspect, the receiver is specifically configured to:
receive a radio resource control RRC connection release message sent by the base station, where the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

In a possible implementation of the sixth aspect, the receiver is specifically configured to:
receive a detach request message sent by the mobility management network element, where the detach request message carries a detach type "re-attach" and the dedicated core network assistance information of the UE, and the detach type "re-attach" is used to instruct the UE to re-initiate the access request.

In a possible implementation of the sixth aspect, the access request message includes an attach request or a location update request.

In a possible implementation of the sixth aspect, the dedicated core network assistance information of the UE is a dedicated core network type of the mobility management network element or the subscribed usage type of the UE.

For beneficial effects of the UE provided in the sixth aspect, refer to the beneficial effects described in the first aspect. Details are not described herein again.

According to a seventh aspect, an embodiment of the present invention provides a system for processing migration between dedicated core networks, including the mobility management network element provided in the third aspect and the user equipment UE provided in the fourth aspect.

According to an eighth aspect, an embodiment of the present invention provides a system for processing migration between dedicated core networks, including the mobility management network element provided in the fifth aspect and the user equipment UE provided in the sixth aspect.

For beneficial effects of the systems provided in the seventh aspect and the eighth aspect, refer to the beneficial effects described in the first aspect. Details are not described herein again.

In the method, device, and system for processing migration between dedicated core networks that are provided in the embodiments, when the subscribed usage type of the UE changes, the mobility management network element obtains the subscribed usage type of the UE, and determines the dedicated core network assistance information of the UE based on the usage type. Then, when requesting the UE to re-initiate the access procedure, the mobility management network element sends the dedicated core network assistance information to the UE. In this way, the UE may send, to the base station, the dedicated core network assistance information in the RRC connection establishment request message triggered when the UE initiates the access procedure. The base station can select, based on the dedicated core network assistance information, the dedicated core network corresponding to the dedicated core network assistance information for the UE and directly migrate the UE to the mobility management network element that can serve UE. As a result, a mobility management network element does not need to initiate a NAS redirection procedure, unnecessary redirection signaling overheads are saved, and isolation between different DCNs is ensured.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show some embodiments of the present invention, and a person of ordinary skill in the art may derive other drawings from these accompanying drawings without creative efforts.
FIG. 1 is a schematic diagram of a system architecture according to the present invention;
FIG. 2 is a schematic flowchart of Embodiment 1 of a method for processing migration between dedicated core networks according to the present invention;
FIG. 3A and FIG. 3B are a schematic flowchart of Embodiment 2 of a method for processing migration between dedicated core networks according to the present invention;
FIG. 4A and FIG. 4B are a schematic flowchart of Embodiment 3 of a method for processing migration between dedicated core networks according to the present invention;
FIG. 5A and FIG. 5B are a schematic flowchart of Embodiment 4 of a method for processing migration between dedicated core networks according to the present invention;
FIG. 6 is a schematic structural diagram of Embodiment 1 of a mobility management network element according to the present invention;
FIG. 7 is a schematic structural diagram of Embodiment 1 of UE according to the present invention;
FIG. 8 is a schematic structural diagram of Embodiment 2 of a mobility management network element according to the present invention; and
FIG. 9 is a schematic structural diagram of Embodiment 2 of UE according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

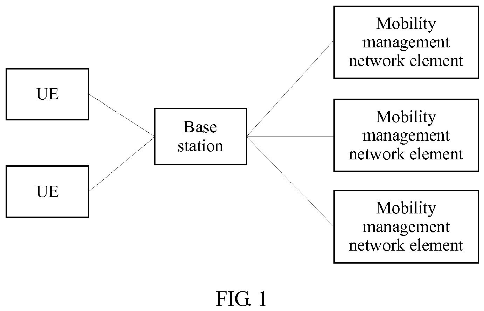

A method for processing migration between dedicated core networks in the embodiments of the present invention may be applicable to migration of UE between core networks of 2G, 3G, 4G, and the like. FIG. 1 is a schematic diagram of a system architecture according to the present invention. As shown in FIG. 1, a system includes user equipment UE, a base station, and a mobility management network element (the mobility management network element is a CN network element), and the UE may communicate with one or more mobility management network elements by using the base station. In a network in which a dedicated core network DCN is deployed, an operator allocates a usage type (usage type) to each UE in a manner of subscription. Each mobility management network element has a DCN type (DCN type). A mobility management network element with a DCN type is also referred to as a DCN network element. A mobility management network element of one DCN type may serve UEs of one or more usage types. In addition, UE of one usage type may be simultaneously served by a plurality of DCN network elements that support different DCN types. Therefore, there may be the following four correspondences between a DCN type of a DCN network element and a usage type of UE:
(1) One-to-one correspondence. For example, a DCN network element whose DCN type is machine type communication can serve only UE whose usage type is smart power-meter communication.
(2) One-to-many correspondence. For example, a DCN network element whose DCN type is machine type communication can serve both UE whose usage type is smart power-meter communication and UE whose usage type is smart water-meter communication.
(3) Many-to-one correspondence. For example, UE whose usage type is self-driving car communication needs to be served by both a DCN network element whose DCN type is machine type communication and a DCN network element whose DCN type is smart car communication.
(4) Many-to-many correspondence. For example, one DCN network element has two DCN types: machine type communication and smart car communication. The machine type communication can be used to serve both UE whose usage type is smart power-meter communication and UE whose usage type is smart water-meter communication. Both the machine type communication and the smart car communication need to serve UE whose usage type is self-driving car communication.

It should be noted that, currently, a relatively proper DCN deployment manner is equivalence between a DCN type of a mobility management network element and a usage type of UE that can be served by the mobility management network element, in other words, the DCN type of the mobility management network element is the usage type of the served UE. For example, if the mobility management network element may serve UE of a usage type 1, UE of a usage type 2, and UE of a usage type 3, three DCN types of the mobility management network element are respectively the usage type 1, the usage type 2, and the usage type 3. The usage type 1 may be specifically machine type communication. The usage type 2 may be specifically smart car communication. The usage type 3 may be specifically smart household communication.

The UE in the embodiments of the present invention may refer to a device that provides a user with voice, short message service, and/or data connectivity, and for example, may include a handheld device with a wireless connection function, or a processing device connected to a wireless modem. The user equipment may communicate with a core network by using a radio access network (Radio Access Network, RAN for short), and exchange voice and/or data with the RAN. The user equipment may include a wireless terminal device, a mobile terminal device, a subscriber unit (Subscriber Unit), a subscriber station (Subscriber Station), a mobile station (Mobile Station), a mobile station (Mobile), a remote station (Remote Station), an access point (Access Point, AP), a remote terminal (Remote Terminal) device, an access terminal (Access Terminal) device, a user terminal (User Terminal) device, a user agent (User Agent), a user device (User Device), or the like. The user equipment may further include a mobile phone (or referred to as a "cellular" phone), a computer with a mobile terminal device, a portable, pocket-sized, handheld, computer built-in, or in-vehicle mobile apparatus, or a device such as a personal communications service (Personal Communication Service, PCS for short) phone, a cordless telephone set, a Session Initiation Protocol (SIP) phone set, a wireless local loop (Wireless Local Loop, WLL for short) station, a personal digital assistant (Personal Digital Assistant, PDA for short), a subscriber unit (Subscriber Unit), a personal computer (Personal Computer), a laptop computer (Laptop Computer), a tablet computer (Tablet Computer), a netbook (Netbook), a handheld (Handheld) device, a data card (Data Card), a USB plug-in device, a mobile Wireless Fidelity hotspot device (WiFi Devices), or a wearable device (Wearable Device) such as a smart watch/smart glasses.

The base station in the embodiments of the present invention may be a base station controller (Base Station Controller, BSC for short) in a 2G network, a radio network controller (Radio Network Controller, RNC for short) or a NodeB (NodeB) in a 3G network, an evolved NodeB (eNodeB, evolved NodeB, E-UTRAN NodeB) in a 4G network, or the like. This is not particularly limited in this application.

The mobility management network element in the embodiments of the present invention may be a mobile switching center (Mobile Switching Center, MSC for short) or a visitor location register (Visitors Location Register, VLR for short) in a 2G/3G network, and the MSC and the VLR are usually jointly disposed as one network element, which is referred to as an MSC/VLR, or simply referred to as a VLR. Alternatively, the mobility management network element may be a serving general packet radio service support node (Serving General Packet Radio Service Support Node, SGSN for short) in a 2G/3G network, or a mobility management entity (Mobility Management Entity, MME for short) in the 4G network. The mobility management network element may further include another device type or the like. This is not particularly limited in this application.

The method for processing migration between dedicated core networks in the embodiments of the present invention is to resolve a prior-art technical problem that unnecessary signaling overheads are generated and isolation between DCNs is affected because a DCN network element needs to initiate a NAS redirection procedure to redirect UE from one DCN network element to another DCN network element that can support a usage type of the UE.

The technical solutions of the present invention and how to use the technical solutions of the present invention to resolve the foregoing technical problem are described in detail below by using specific embodiments. The following specific embodiments may be mutually combined, and same or similar concepts or processes may not be repeatedly described in some embodiments.

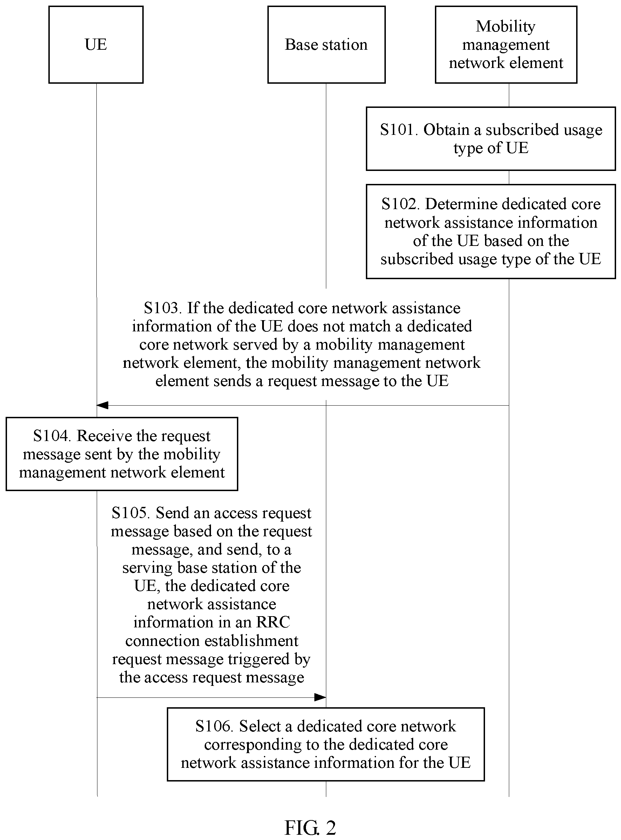

FIG. 2 is a schematic flowchart of Embodiment 1 of a method for processing migration between dedicated core networks according to the present invention. As shown in FIG. 2, the method provided in this embodiment includes the following steps.

S101. A mobility management network element obtains a subscribed usage type of UE.

Specifically, in a network in which a dedicated core network is deployed, an operator allocates a usage type to UEs with a same communication characteristic in a manner of subscription. For example, the usage type may be a handheld device, a smart household, a vehicle, or the like. A home subscriber server (Home Subscriber Server, HSS for short) or a home location register (Home Location Register, HLR for short) of the UE saves the subscribed usage type of the UE. When the usage type of the UE changes, the mobility management network element may obtain an updated usage type of the UE from the HSS/HLR. Specifically, when the subscribed usage type of the UE in the HSS/HLR changes, the HSS/HLR actively notifies the updated usage type of the UE to the mobility management network element serving the UE.

S102. The mobility management network element determines dedicated core network assistance information of the UE based on the subscribed usage type of the UE.

Dedicated core network assistance information (DCN Assistance Information) is also referred to as a dedicated core network selection assistance parameter (DCN Selection Assistance Parameter), and is allocated by the operator to a dedicated core network (including a mobility management network element) deployed in a network of the operator. A mobility management network element represented by dedicated core network assistance information may serve UEs of one or more usage types. The dedicated core network assistance information of the UE is dedicated core network assistance information corresponding to a mobility management network element that can serve the UE.

In this embodiment, the dedicated core network assistance information may be a DCN type of the mobility management network element and/or the subscribed usage type of the UE, or other information that may represent the DCN type of the mobility management network element and/or the subscribed usage type of the UE. A specific name of the information is not specifically limited in the present invention. Specifically, each mobility management network element has a DCN type, and a mobility management network element of one DCN type may serve UEs of one or more usage types. If one mobility management network element serves only UE of one usage type, the DCN type may be the usage type of the UE, and the dedicated core network assistance information may be the DCN type or the usage type of the UE. If one mobility management network element serves UEs of a plurality of usage types, the dedicated core network assistance information is the DCN type. For example, the DCN type may be a type such as machine type communication MTC, Cellular Internet of Things (Cellular Internet of Things, CloT for short) communication, mobile broadband (Mobile Broadband, MBB for short) communication, or Internet of Vehicles communication. A DCN of Internet of Vehicles communication may serve vehicles of a plurality of brands (usage types).

Optionally, in this embodiment, the mobility management network element can determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

Specifically, the mobility management network element can save the mapping relationship that is configured by the operator and that is between a usage type of UE and a dedicated core network. According to the mapping relationship, the mobility management network element may directly obtain the dedicated core network assistance information corresponding to the usage type of the UE.

Alternatively, the mobility management network element may obtain, based on the locally configured operator policy, the dedicated core network assistance information corresponding to the usage type of the UE. For example, for roaming UE, the operator can configure a corresponding access policy, and determine, according to a signed roaming protocol, a dedicated core network that can be accessed by the UE of the usage type. In view of this, the mobility management network element obtains the dedicated core network assistance information corresponding to the usage type of the UE.

Alternatively, the mobility management network element may determine, based on available context information of the UE, the dedicated core network assistance information corresponding to the usage type of the UE. For example, for UE whose usage type is CloT, the mobility management network element can determine the dedicated core network assistance information of the UE based on saved context information such as a CloT control plane optimization capability or a CloT user plane optimization capability that is supported by the UE.

S103. If the dedicated core network assistance information of the UE does not match a dedicated core network served by the mobility management network element, the mobility management network element sends a request message to the UE.

The request message is used to instruct the UE to re-initiate an access request, and the request message carries the dedicated core network assistance information of the UE.

Specifically, when the usage type of the UE changes, the dedicated core network assistance information of the UE does not match a dedicated core network served by the mobility management network element that currently serves the UE. In other words, the mobility management network element that currently serves the UE cannot continuously serve the UE corresponding to the dedicated core network assistance information. In this case, the mobility management network element can send the dedicated core network assistance information in the request message to the UE, to notify the UE of dedicated core network assistance information corresponding to a mobility management network element that can serve the UE, and request the UE to re-initiate the access request, so that a base station directly migrates the UE to the mobility management network element that can serve the UE. For example, if a usage type of UE changes from a smart car of a brand A to a smart car of a brand B, and a DCN type of a mobility management network element serving the UE currently indicates that the mobility management network element can serve only the smart car of the brand A, the mobility management network element sends, to the UE, determined dedicated core network assistance information (Internet of Vehicles of the brand B) corresponding to the smart car of the brand B.

S104. The UE receives the request message sent by the mobility management network element.

Specifically, after receiving the request message sent by the mobility management network element, the UE can learn of the dedicated core network assistance information corresponding to the mobility management network element that can serve the UE, and then report the dedicated core network assistance information to the base station.

S105. The UE sends an access request message based on the request message, and sends, to a serving base station of the UE, the dedicated core network assistance information in an RRC connection establishment request message triggered by the access request message.

The dedicated core network assistance information is used by the base station to select a dedicated core network DCN corresponding to the dedicated core network assistance information for the UE.

Specifically, after receiving the request message sent by the mobility management network element, the UE re-initiates an access procedure. In the access procedure, the UE needs to first establish a connection to the serving base station. To be specific, the UE first triggers the radio resource control (Radio Resource Control, RRC for short) connection establishment request message when sending the access request message. In this case, the UE may send the dedicated core network assistance information in the RRC connection establishment request message to the base station, so that the base station selects, based on the dedicated core network assistance information, the dedicated core network corresponding to the dedicated core network assistance information.

In this embodiment, the access request re-initiated by the UE may be an attach request (Attach Request) or a location update request. This may be specifically determined based on indication information in the request message sent by the mobility management network element. Specifically, the location update request may include a location area update (Location Area Updating, LAU for short) request, a routing area update (Routing Area Updating, RAU for short) request, or a tracking area update (Tracking Area Updating, TAU for short) request.

S106. The base station selects a dedicated core network corresponding to the dedicated core network assistance information for the UE.

Specifically, the base station receives the RRC connection establishment request message sent by the UE. After establishing a connection to the UE, the base station may select, based on the dedicated core network assistance information, the dedicated core network corresponding to the dedicated core network assistance information, and forward, to a mobility management network element that can serve the UE corresponding to the dedicated core network assistance information, the request message sent by the UE. Therefore, the UE is migrated to the mobility management network element that can serve the UE.

It should be noted that the base station has saved a configuration relationship between dedicated core network assistance information and a corresponding DCN network element. For example, if the dedicated core network assistance information is a DCN type, the base station saves a correspondence between a DCN type 1 and a DCN network element A, and a correspondence between a DCN type 2 and a DCN network element B. If the dedicated core network assistance information is a usage type of UE, the base station saves a correspondence between a usage type 1 and a DCN network element A, a correspondence between a usage type 2 and a DCN network element B, and the like.

In the method for processing migration between dedicated core networks in this embodiment, when the subscribed usage type of the UE changes, the mobility management network element obtains the subscribed usage type of the UE, and determines the dedicated core network assistance information of the UE based on the usage type. Then, when requesting the UE to re-initiate the access procedure, the mobility management network element sends the dedicated core network assistance information to the UE. In this way, the UE may send, to the serving base station, the dedicated core network assistance information in the RRC connection establishment request message triggered when the UE re-initiates the access procedure. The base station can select, based on the dedicated core network assistance information, the dedicated core network corresponding to the dedicated core network assistance information for the UE and directly migrate the UE to the mobility management network element that can serve UE of an updated usage type. As a result, a mobility management network element does not need to initiate a NAS redirection procedure, unnecessary redirection signaling overheads are saved, and isolation between different DCNs is ensured.

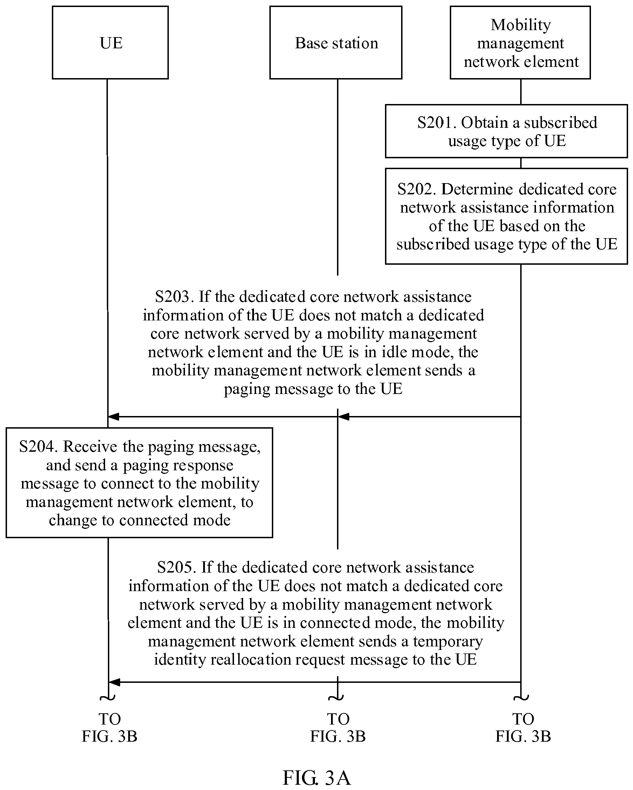

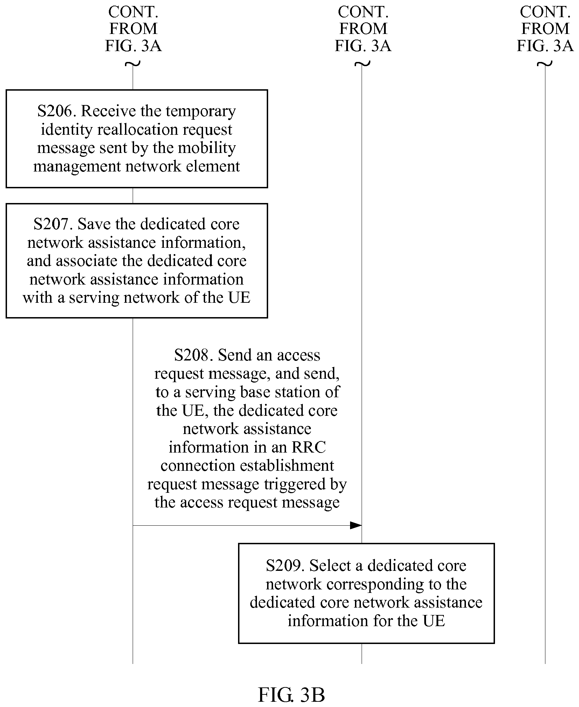

FIG. 3A and FIG. 3B are a schematic flowchart of Embodiment 2 of a method for processing migration between dedicated core networks according to the present invention. This embodiment describes in detail a specific implementation of step S103 in the embodiment shown in FIG. 2. As shown in FIG. 3A and FIG. 3B, the method provided in this embodiment includes the following steps.

S201. A mobility management network element obtains a subscribed usage type of UE.

For this step, refer to the description of the corresponding step in the embodiment shown in FIG. 2. Details are not described herein again.

S202. The mobility management network element determines dedicated core network assistance information of the UE based on the subscribed usage type of the UE; and if the dedicated core network assistance information of the UE does not match a dedicated core network served by the mobility management network element and the UE is in idle mode, perform steps S203 and S204; or if the UE is in connected mode, directly perform step S205 and skip steps S203 and S204.

For this step, refer to the description of the corresponding step in the embodiment shown in FIG. 2. Details are not described herein again.

S203. The mobility management network element sends a paging message to the UE.

This step belongs to the prior art. Details are not described herein.

S204. The UE receives the paging message, and sends a paging response message to connect to the mobility management network element, to change to connected mode.

This step belongs to the prior art. Details are not described herein.

S205. The mobility management network element sends a temporary identity reallocation request message to the UE.

The temporary identity reallocation request message carries a non-broadcast location area identifier and the dedicated core network assistance information of the UE, and the non-broadcast location area identifier is used to instruct the UE to re-initiate an access request.

Specifically, in a 4G network, the temporary identity reallocation request message may be a globally unique temporary identity (Globally Unique Temporary Identity, GUTI for short) reallocation command (GUTI REALLOCATION COMMAND) message of the UE. In a 2G/3G network, the temporary identity reallocation request message may be a temporary mobile subscriber identity (Temporary Mobile Subscriber Identity, TMSI for short) reallocation command (TMSI REALLOCATION COMMAND) message, a packet temporary mobile subscriber identity (Packet Temporary Mobile Subscriber Identity, P-TMSI for short) reallocation command (P-TMSI REALLOCATION COMMAND) message, or the like.

Correspondingly, in the 4G network, the non-broadcast location area identifier carried in the temporary identity reallocation request message is specifically a non-broadcast tracking area identity (non-broadcast Tracking Area Identity, non-broadcast TAI for short). In the 2G/3G network, the non-broadcast location area identifier carried in the temporary identity reallocation request message is specifically a non-broadcast location area identity (non-broadcast Location Area Identity, non-broadcast LAI for short) or a non-broadcast routing area identity (non-broadcast Routing Area Identity, non-broadcast RAI for short). The identifier is used to instruct the UE to re-initiate an access request. In this case, the access request re-initiated by the UE is specifically a location update request.

S206. The UE receives the temporary identity reallocation request message sent by the mobility management network element.

S207. The UE saves the dedicated core network assistance information, and associates the dedicated core network assistance information with a serving network of the UE.

Specifically, after receiving the request message sent by the mobility management network element, the UE learns of the dedicated core network assistance information corresponding to the mobility management network element that can serve the UE. In this case, the UE can save the dedicated core network assistance information, and associate the dedicated core network assistance information with a current serving public land mobile network (Public Land Mobile Network, PLMN for short) of the UE. To be specific, a mobility management network element that is in the current serving PLMN and that serves the UE is a DCN network element corresponding to the dedicated core network assistance information. The dedicated core network assistance information is updated, so that the UE reports the updated dedicated core network assistance information when the UE subsequently initiates the access request in the serving PLMN.

S208. The UE sends an access request message, and sends, to the serving base station of the UE, the dedicated core network assistance information in an RRC connection establishment request message triggered by the access request message.

Specifically, after receiving the temporary identity reallocation request message sent by the mobility management network element, the UE initiates a location update procedure. In the procedure, the UE sends, to the serving base station, the dedicated core network assistance information in the RRC connection establishment request message.

S209. The base station selects a dedicated core network DCN corresponding to the dedicated core network assistance information for the UE.

For this step, refer to the description of the corresponding step in the embodiment shown in FIG. 2. Details are not described herein again.

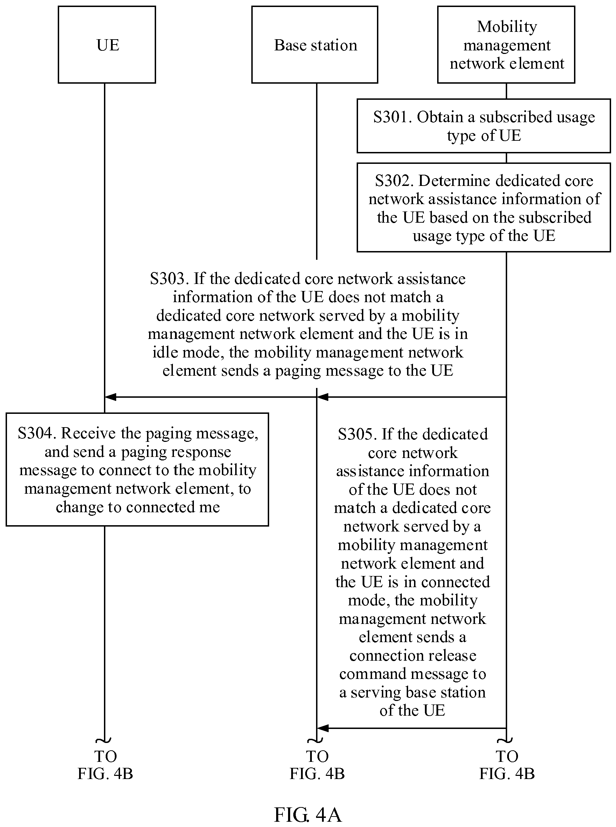

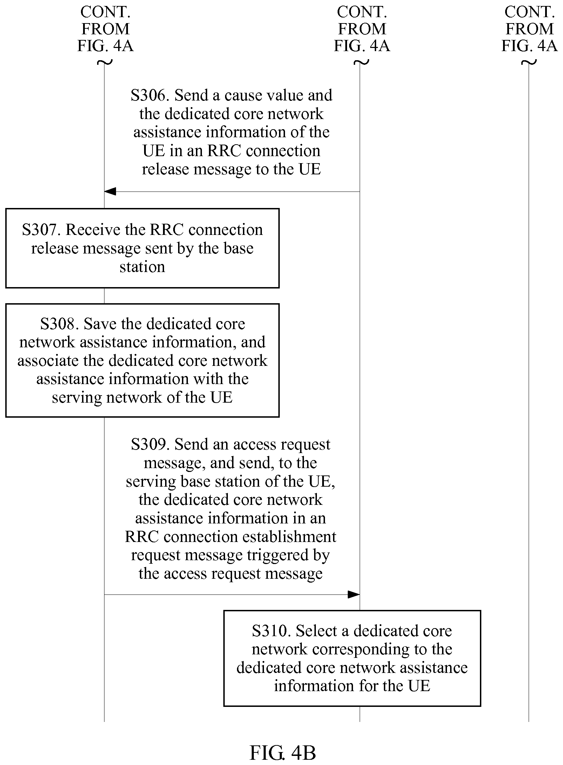

FIG. 4A and FIG. 4B are a schematic flowchart of Embodiment 3 of a method for processing migration between dedicated core networks according to the present invention. This embodiment describes in detail another specific implementation of step S103 in the embodiment shown in FIG. 2. As shown in FIG. 4A and FIG. 4B, the method provided in this embodiment includes the following steps.

S301. A mobility management network element obtains a subscribed usage type of UE.

For this step, refer to the description of the corresponding step in the embodiment shown in FIG. 2. Details are not described herein again.

S302. The mobility management network element determines dedicated core network assistance information of the UE based on the subscribed usage type of the UE; and if the dedicated core network assistance information of the UE does not match a dedicated core network served by the mobility management network element and the UE is in idle mode, perform steps S303 and S304; or if the UE is in connected mode, directly perform step S305 and skip steps S303 and S304.

For this step, refer to the description of the corresponding step in the embodiment shown in FIG. 2. Details are not described herein again.

S303. The mobility management network element sends a paging message to the UE.

This step belongs to the prior art. Details are not described herein.

S304. The UE receives the paging message, and sends a paging response message to connect to the mobility management network element, to change to connected mode.

This step belongs to the prior art. Details are not described herein.

S305. The mobility management network element sends a connection release command message to a serving base station of the UE.

The connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate an access request.

Specifically, the connection release command (Release Command) message may be a UE context connection release command (UE Context Release Command) message, or may be an Iu connection release command (Iu Release Command) message.

When sending the connection release command message, the mobility management network element adds the cause value to the message. In this embodiment, for example, the cause value may be DCN reselection, to instruct the UE to re-initiate the access request to implement DCN reselection, or the cause value may be another cause value that is used to instruct the UE to re-initiate the access request because DCN reselection needs to be performed.

S306. The base station sends, to the UE, the cause value and the dedicated core network assistance information of the UE in an RRC connection release message.

Specifically, after receiving the connection release command message, the base station sends an RRC connection release (RRC connection release) message to the UE, and the base station can forward the cause value to the UE by using the RRC connection release message, to instruct the UE to re-initiate the access request. In this case, the access request re-initiated by the UE is specifically a location update request.

S307. The UE receives the RRC connection release message sent by the base station.

This step belongs to the prior art. Details are not described herein.

S308. The UE saves the dedicated core network assistance information, and associates the dedicated core network assistance information with the serving network of the UE.

For this step, refer to the description of the corresponding step in the embodiment shown in FIG. 3A and FIG. 3B. Details are not described herein again.

S309. The UE sends an access request message, and sends, to the serving base station of the UE, the dedicated core network assistance information in an RRC connection establishment request message triggered by the access request message.

Specifically, after receiving the RRC connection release message sent by the mobility management network element, the UE initiates a location update procedure based on the cause value. In the procedure, the UE sends, to the base station, the dedicated core network assistance information in the RRC connection establishment request message.

S310. The base station selects a dedicated core network corresponding to the dedicated core network assistance information for the UE.

For this step, refer to the description of the corresponding step in the embodiment shown in FIG. 2. Details are not described herein again.

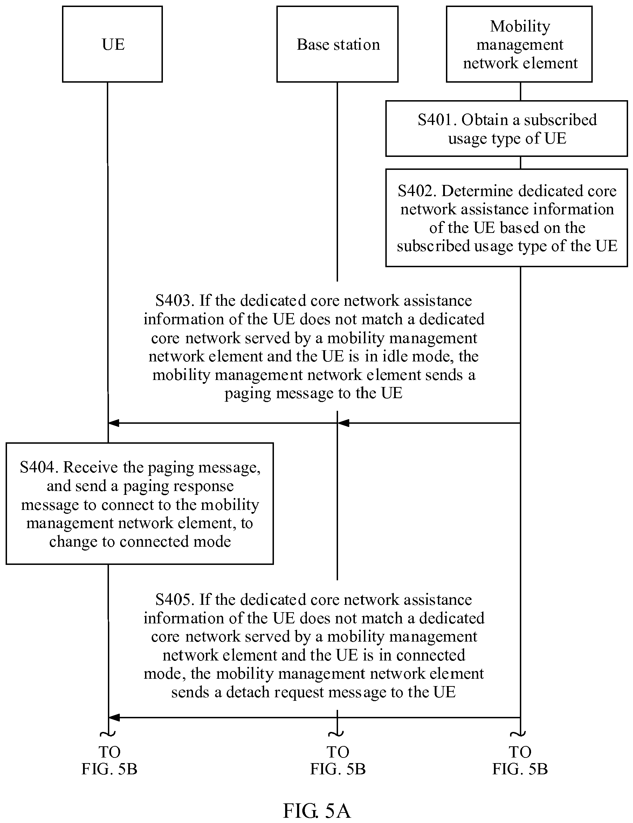

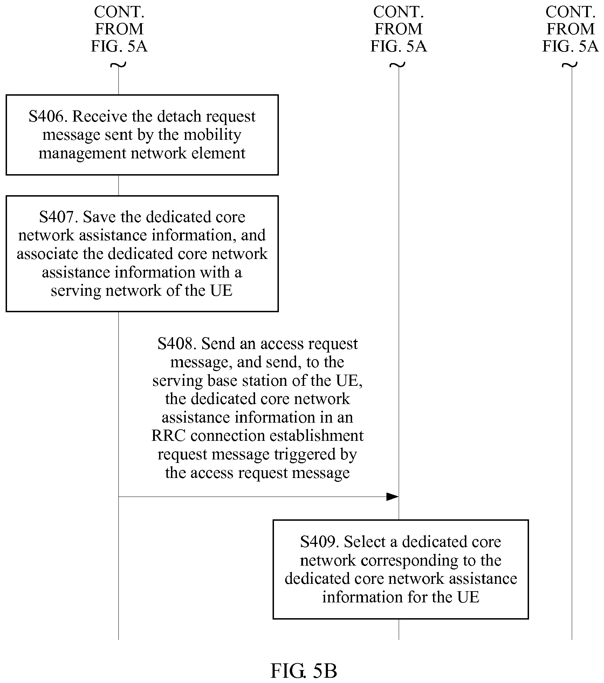

FIG. 5A and FIG. 5B are a schematic flowchart of Embodiment 4 of a method for processing migration between dedicated core networks according to the present invention. This embodiment describes in detail still another specific implementation of step S103 in the embodiment shown in FIG. 2. As shown in FIG. 5A and FIG. 5B, the method provided in this embodiment includes the following steps.

S401. A mobility management network element obtains a subscribed usage type of UE.

For this step, refer to the description of the corresponding step in the embodiment shown in FIG. 2. Details are not described herein again.

S402. The mobility management network element determines dedicated core network assistance information of the UE based on the subscribed usage type of the UE; and if the dedicated core network assistance information of the UE does not match a dedicated core network served by the mobility management network element and the UE is in idle mode, perform steps S403 and S404; or if the UE is in connected mode, directly perform step S405 and skip steps S403 and S404.

For this step, refer to the description of the corresponding step in the embodiment shown in FIG. 2. Details are not described herein again.

S403. The mobility management network element sends a paging message to the UE.

This step belongs to the prior art. Details are not described herein.

S404. The UE receives the paging message, and sends a paging response message to connect to the mobility management network element.

This step belongs to the prior art. Details are not described herein.

S405. The mobility management network element sends a detach request message to the UE.

The detach request message carries a detach type "re-attach" and the dedicated core network assistance information of the UE, and the detach type "re-attach" is used to instruct the UE to re-initiate an access request (which is specifically an attach request).

S406. The UE receives the detach request message sent by the mobility management network element.

This step belongs to the prior art. Details are not described herein.

S407. The UE saves the dedicated core network assistance information, and associates the dedicated core network assistance information with a serving network of the UE.

For this step, refer to the description of the corresponding step in the embodiment shown in FIG. 3A and FIG. 3B. Details are not described herein again.

S408. The UE sends an access request message, and sends, to the serving base station of the UE, the dedicated core network assistance information in an RRC connection establishment request message triggered by the access request message.

Specifically, after receiving the detach request message sent by the mobility management network element, the UE initiates an attach procedure. In the procedure, the UE sends, to the base station, the dedicated core network assistance information in the RRC connection establishment request message.

S409. The base station selects a dedicated core network corresponding to the dedicated core network assistance information for the UE.

For this step, refer to the description of the corresponding step in the embodiment shown in FIG. 2. Details are not described herein again.

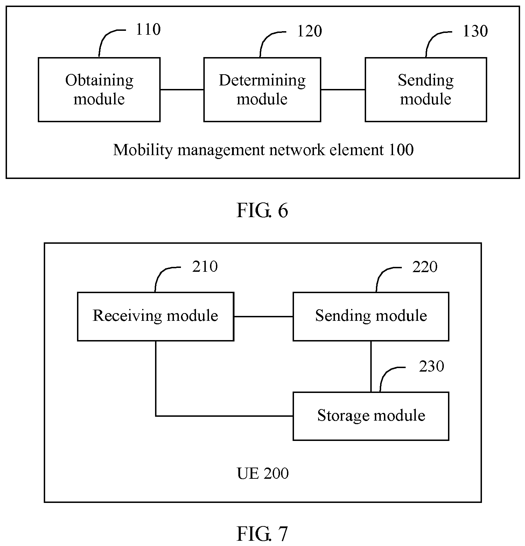

FIG. 6 is a schematic structural diagram of Embodiment 1 of a mobility management network element according to the present invention. As shown in FIG. 6, a mobility management network element 100 in this embodiment includes:
an obtaining module 110, configured to obtain a subscribed usage type of user equipment UE;
a determining module 120, configured to determine dedicated core network assistance information of the UE based on the subscribed usage type of the UE; and
a sending module 130, configured to: if the dedicated core network assistance information of the UE does not match a dedicated core network served by the mobility management network element, send a request message to the UE, where the request message is used to instruct the UE to re-initiate an access request, and the request message carries the dedicated core network assistance information of the UE.

In a specific implementation of this embodiment of the present invention, the determining module 120 is specifically configured to: determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

Optionally, the sending module 130 is further configured to: if the UE is in idle mode, before sending the request message to the UE, send a paging message to the UE, so that the UE changes to connected mode.

In a first possible implementation of this embodiment of the present invention, the sending module 130 is specifically configured to: send a temporary identity reallocation request message to the UE, where the temporary identity reallocation request message carries a non-broadcast location area identifier and the dedicated core network assistance information of the UE, and the non-broadcast location area identifier is used to instruct the UE to re-initiate the access request.

In a second possible implementation of this embodiment of the present invention, the sending module 130 is specifically configured to: send a connection release command message to a serving base station of the UE, where the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

In a third possible implementation of this embodiment of the present invention, the sending module 130 is specifically configured to: send a detach request message to the UE, where the detach request message carries a detach type "re-attach" and the dedicated core network assistance information of the UE, and the detach type "re-attach" is used to instruct the UE to re-initiate the access request.

In this embodiment, optionally, the access request re-initiated by the UE includes an attach request or a location update request.

The dedicated core network assistance information of the UE includes a dedicated core network type of the mobility management network element and/or the subscribed usage type of the UE.

The mobility management network element provided in this embodiment can perform the foregoing method embodiments, and implementation principles and technical effects of the method and the mobility management network element are similar and are not described herein again.

FIG. 7 is a schematic structural diagram of Embodiment 1 of UE according to the present invention. As shown in FIG. 7, UE 200 in this embodiment includes:
a receiving module 210, configured to receive a request message sent by a mobility management network element, where the request message is used to instruct the UE to re-initiate an access request, and the request message carries dedicated core network assistance information determined by the mobility management network element for the UE; and
a sending module 220, configured to: send an access request message based on the request message, and send, to a serving base station of the UE, the dedicated core network assistance information in a radio resource control RRC connection establishment request message triggered by the access request message, where the dedicated core network assistance information is used by the base station to select a dedicated core network corresponding to the dedicated core network assistance information for the UE.

Optionally, in this embodiment, the UE 200 further includes a storage module 230, configured to: save the dedicated core network assistance information, and associate the dedicated core network assistance information with a serving network of the UE.

In a specific implementation of this embodiment of the present invention, the dedicated core network assistance information is determined by the mobility management network element based on the subscribed usage type of the UE and at least one of the following information: a mapping relationship that is configured by an operator and that is between a usage type of the UE and a dedicated core network, a locally configured operator policy, or context information of the UE.

Optionally, the receiving module 210 is further configured to: receive a paging message sent by the mobility management network element, and send a paging response message by using the sending module 220 to connect to the mobility management network element.

In a first possible implementation of this embodiment of the present invention, the receiving module 210 is specifically configured to: receive a temporary identity reallocation request message sent by the mobility management network element, where the temporary identity reallocation request message carries a non-broadcast location area identifier and the dedicated core network assistance information of the UE, and the non-broadcast location area identifier is used to instruct the UE to re-initiate the access request.

In a second possible implementation of this embodiment of the present invention, the receiving module 210 is specifically configured to: receive a radio resource control RRC connection release message sent by the base station, where the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

In a third possible implementation of this embodiment of the present invention, the receiving module 210 is specifically configured to: receive a detach request message sent by the mobility management network element, where the detach request message carries a detach type "re-attach" and the dedicated core network assistance information of the UE, and the detach type "re-attach" is used to instruct the UE to re-initiate the access request.

In this embodiment, optionally, the access request message includes an attach request or a location update request.

The dedicated core network assistance information of the UE may be a dedicated core network type of the mobility management network element or the subscribed usage type of the UE.

The UE provided in this embodiment of the present invention can perform the foregoing method embodiments, and implementation principles and technical effects of the method and the UE are similar and are not repeatedly described herein.

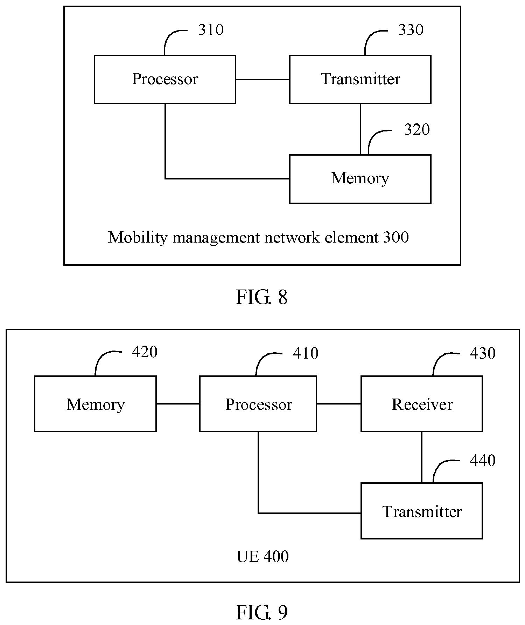

FIG. 8 is a schematic structural diagram of Embodiment 2 of a mobility management network element according to the present invention. As shown in FIG. 8, a mobility management network element 300 in this embodiment includes a processor 310, a memory 320, and a transmitter 330.

The memory 320 may include a read-only memory and a random access memory, and provide an instruction and data for the processor 310.

In this embodiment, by invoking a program or an instruction stored in the memory 320, the processor 310 is configured to: obtain a subscribed usage type of user equipment UE; and determine dedicated core network assistance information of the UE based on the subscribed usage type of the UE.

The transmitter 330 is configured to: if the dedicated core network assistance information of the UE does not match a dedicated core network served by the mobility management network element, send a request message to the UE, where the request message is used to instruct the UE to re-initiate an access request, and the request message carries the dedicated core network assistance information of the UE.

In a specific implementation of this embodiment of the present invention, the processor 310 is specifically configured to: determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

Optionally, the transmitter 330 is further configured to: if the UE is in idle mode, before sending the request message to the UE, send a paging message to the UE, so that the UE changes to connected mode.

In a first possible implementation of this embodiment of the present invention, the transmitter 330 is specifically configured to: send a temporary identity reallocation request message to the UE, where the temporary identity reallocation request message carries a non-broadcast location area identifier and the dedicated core network assistance information of the UE, and the non-broadcast location area identifier is used to instruct the UE to re-initiate the access request.

In a second possible implementation of this embodiment of the present invention, the transmitter 330 is specifically configured to: send a connection release command message to a serving base station of the UE, where the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

In a third possible implementation of this embodiment of the present invention, the transmitter 330 is specifically configured to: send a detach request message to the UE, where the detach request message carries a detach type "re-attach" and the dedicated core network assistance information of the UE, and the detach type "re-attach" is used to instruct the UE to re-initiate the access request.

In this embodiment, optionally, the access request re-initiated by the UE includes an attach request or a location update request.

The dedicated core network assistance information of the UE includes a dedicated core network type of the mobility management network element and/or the subscribed usage type of the UE.

The mobility management network element provided in this embodiment can perform the foregoing method embodiments, and implementation principles and technical effects of the method and the mobility management network element are similar and are not described herein again.

FIG. 9 is a schematic structural diagram of Embodiment 2 of UE according to the present invention. As shown in FIG. 9, UE 400 in this embodiment includes a processor 410, a memory 420, a receiver 430, and a transmitter 440.

The memory 420 may include a read-only memory and a random access memory, and provide an instruction and data for the processor 410.

In this embodiment, the receiver 430 is configured to receive a request message sent by a mobility management network element, where the request message is used to instruct the UE to re-initiate an access request, and the request message carries dedicated core network assistance information determined by the mobility management network element for the UE.

The transmitter 440 is configured to: send an access request message based on the request message, and send, to a serving base station of the UE, the dedicated core network assistance information in a radio resource control RRC connection establishment request message triggered by the access request message, where the dedicated core network assistance information is used by the base station to select a dedicated core network corresponding to the dedicated core network assistance information for the UE.

Optionally, in this embodiment, the memory 420 is configured to save the dedicated core network assistance information. The processor 410 is configured to associate the dedicated core network assistance information with a serving network of the UE by invoking a program or an instruction stored in the memory 420.

In a specific implementation of this embodiment of the present invention, the dedicated core network assistance information is determined by the mobility management network element based on the subscribed usage type of the UE and at least one of the following information: a mapping relationship that is configured by an operator and that is between a usage type of the UE and a dedicated core network, a locally configured operator policy, or context information of the UE.

Optionally, the receiver 430 is further configured to: receive a paging message sent by the mobility management network element, and send a paging response message by using the transmitter 440 to connect to the mobility management network element.

In a first possible implementation of this embodiment of the present invention, the receiver 430 is specifically configured to: receive a temporary identity reallocation request message sent by the mobility management network element, where the temporary identity reallocation request message carries a non-broadcast location area identifier and the dedicated core network assistance information of the UE, and the non-broadcast location area identifier is used to instruct the UE to re-initiate the access request.

In a second possible implementation of this embodiment of the present invention, the receiver 430 is specifically configured to: receive a radio resource control RRC connection release message sent by the base station, where the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

In a third possible implementation of this embodiment of the present invention, the receiver 430 is specifically configured to: receive a detach request message sent by the mobility management network element, where the detach request message carries a detach type "re-attach" and the dedicated core network assistance information of the UE, and the detach type "re-attach" is used to instruct the UE to re-initiate the access request.

In this embodiment, optionally, the access request message includes an attach request or a location update request.

The dedicated core network assistance information of the UE may be a dedicated core network type of the mobility management network element or the subscribed usage type of the UE.

The UE provided in this embodiment of the present invention can perform the foregoing method embodiments, and implementation principles and technical effects of the method and the UE are similar and are not repeatedly described herein.

An embodiment of the present invention provides a system for processing migration between dedicated core networks. The system includes the mobility management network element in the embodiment shown in FIG. 6 and the user equipment UE in the embodiment shown in FIG. 7.

An embodiment of the present invention further provides a system for processing migration between dedicated core networks. The system includes the mobility management network element in the embodiment shown in FIG. 8 and the user equipment UE in the embodiment shown in FIG. 9.

Specifically, there is at least one mobility management network element and at least one UE, the system can perform the foregoing method embodiments, and implementation principles and technical effects of the method and the system are similar and are not described herein again.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for processing migration between dedicated core networks, comprising:
obtaining, by a mobility management network element, a subscribed usage type of user equipment UE;
determining, by the mobility management network element, dedicated core network assistance information of the UE based on the subscribed usage type of the UE; and
if the dedicated core network assistance information of the UE does not match a dedicated core network served by the mobility management network element, sending, by the mobility management network element, a request message to the UE, wherein the request message is used to instruct the UE to re-initiate an access request, and the request message carries the dedicated core network assistance information of the UE.

2. The method according to claim 1, wherein the determining dedicated core network assistance information of the UE based on the subscribed usage type of the UE comprises:
determining, by the mobility management network element, the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

3. The method according to claim 1 or 2, wherein if the UE is in idle mode, before the sending, by the mobility management network element, a request message to the UE, the method further comprises:
sending, by the mobility management network element, a paging message to the UE, so that the UE changes to connected mode.

4. The method according to any one of claims 1 to 3, wherein the sending, by the mobility management network element, a request message to the UE specifically comprises:
sending, by the mobility management network element, a temporary identity reallocation request message to the UE, wherein the temporary identity reallocation request message carries a non-broadcast location area identifier and the dedicated core network assistance information of the UE, and the non-broadcast location area identifier is used to instruct the UE to re-initiate the access request.

5. The method according to any one of claims 1 to 3, wherein the sending, by the mobility management network element, a request message to the UE specifically comprises:
sending, by the mobility management network element, a connection release command message to a serving base station of the UE, wherein the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

6. The method according to any one of claims 1 to 3, wherein the sending, by the mobility management network element, a request message to the UE specifically comprises:
sending, by the mobility management network element, a detach request message to the UE, wherein the detach request message carries a detach type "re-attach" and the dedicated core network assistance information of the UE, and the detach type "re-attach" is used to instruct the UE to re-initiate the access request.

7. The method according to any one of claims 1 to 6, wherein the access request re-initiated by the UE comprises an attach request or a location update request.

8. The method according to any one of claims 1 to 7, wherein the dedicated core network assistance information of the UE comprises a dedicated core network type of the mobility management network element and/or the subscribed usage type of the UE.

9. A method for processing migration between dedicated core networks, comprising:
receiving, by user equipment UE, a request message sent by a mobility management network element, wherein the request message is used to instruct the UE to re-initiate an access request, and the request message carries dedicated core network assistance information determined by the mobility management network element for the UE; and
sending, by the UE, an access request message based on the request message, and sending, to a serving base station of the UE, the dedicated core network assistance information in a radio resource control RRC connection establishment request message triggered by the access request message, wherein the dedicated core network assistance information is used by the base station to select a dedicated core network corresponding to the dedicated core network assistance information for the UE.

10. The method according to claim 9, further comprising: saving, by the UE, the dedicated core network assistance information, and associating the dedicated core network assistance information with a serving network of the UE.

11. The method according to claim 9 or 10, wherein the dedicated core network assistance information is determined by the mobility management network element based on a subscribed usage type of the UE and at least one of the following information: a mapping relationship that is configured by an operator and that is between a usage type of the UE and a dedicated core network, a locally configured operator policy, or context information of the UE.

12. The method according to any one of claims 9 to 11, wherein if the UE is in idle mode, before the receiving, by UE, a request message sent by a mobility management network element, the method further comprises:
receiving, by the UE, a paging message sent by the mobility management network element, and sending a paging response message to connect to the mobility management network element.

13. The method according to any one of claims 9 to 12, wherein the receiving, by UE, a request message sent by a mobility management network element specifically comprises:
receiving, by the UE, a temporary identity reallocation request message sent by the mobility management network element, wherein the temporary identity reallocation request message carries a non-broadcast location area identifier and the dedicated core network assistance information of the UE, and the non-broadcast location area identifier is used to instruct the UE to re-initiate the access request.

14. The method according to any one of claims 9 to 12, wherein the receiving, by UE, a request message sent by a mobility management network element specifically comprises:
receiving, by the UE, a radio resource control RRC connection release message sent by the base station, wherein the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

15. The method according to any one of claims 9 to 12, wherein the receiving, by UE, a request message sent by a mobility management network element specifically comprises:
receiving, by the UE, a detach request message sent by the mobility management network element, wherein the detach request message carries a detach type "re-attach" and the dedicated core network assistance information of the UE, and the detach type "re-attach" is used to instruct the UE to re-initiate the access request.

16. The method according to any one of claims 9 to 15, wherein the access request message comprises an attach request or a location update request.

17. The method according to any one of claims 9 to 16, wherein the dedicated core network assistance information of the UE is a dedicated core network type of the mobility management network element or the subscribed usage type of the UE.

18. A mobility management network element, comprising:
an obtaining module, configured to obtain a subscribed usage type of user equipment UE;
a determining module, configured to determine dedicated core network assistance information of the UE based on the subscribed usage type of the UE; and
a sending module, configured to: if the dedicated core network assistance information of the UE does not match a dedicated core network served by the mobility management network element, send a request message to the UE, wherein the request message is used to instruct the UE to re-initiate an access request, and the request message carries the dedicated core network assistance information of the UE.

19. The mobility management network element according to claim 18, wherein the determining module is specifically configured to:
determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

20. The mobility management network element according to claim 18 or 19, wherein the sending module is further configured to: if the UE is in idle mode, before sending the request message to the UE, send a paging message to the UE, so that the UE changes to connected mode.

21. The mobility management network element according to any one of claims 18 to 20, wherein the sending module is specifically configured to:
send a temporary identity reallocation request message to the UE, wherein the temporary identity reallocation request message carries a non-broadcast location area identifier and the dedicated core network assistance information of the UE, and the non-broadcast location area identifier is used to instruct the UE to re-initiate the access request.

22. The mobility management network element according to any one of claims 18 to 20, wherein the sending module is specifically configured to:
send a connection release command message to a serving base station of the UE, wherein the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

23. The mobility management network element according to any one of claims 18 to 20, wherein the sending module is specifically configured to:
send a detach request message to the UE, wherein the detach request message carries a detach type "re-attach" and the dedicated core network assistance information of the UE, and the detach type "re-attach" is used to instruct the UE to re-initiate the access request.

24. The mobility management network element according to any one of claims 18 to 23, wherein the access request re-initiated by the UE comprises an attach request or a location update request.

25. The mobility management network element according to any one of claims 18 to 24, wherein the dedicated core network assistance information of the UE comprises a dedicated core network type of the mobility management network element and/or the subscribed usage type of the UE.

26. User equipment UE, comprising:
a receiving module, configured to receive a request message sent by a mobility management network element, wherein the request message is used to instruct the UE to re-initiate an access request, and the request message carries dedicated core network assistance information determined by the mobility management network element for the UE; and
a sending module, configured to: send an access request message based on the request message, and send, to a serving base station of the UE, the dedicated core network assistance information in a radio resource control RRC connection establishment request message triggered by the access request message, wherein the dedicated core network assistance information is used by the base station to select a dedicated core network corresponding to the dedicated core network assistance information for the UE.

27. The UE according to claim 26, further comprising:
a storage module, configured to: save the dedicated core network assistance information, and associate the dedicated core network assistance information with a serving network of the UE.

28. The UE according to claim 26 or 27, wherein the dedicated core network assistance information is determined by the mobility management network element based on a subscribed usage type of the UE and at least one of the following information: a mapping relationship that is configured by an operator and that is between a usage type of the UE and a dedicated core network, a locally configured operator policy, or context information of the UE.

29. The UE according to any one of claims 26 to 28, wherein the receiving module is further configured to:
receive a paging message sent by the mobility management network element, and send a paging response message by using the sending module to connect to the mobility management network element.

30. The UE according to any one of claims 26 to 29, wherein the receiving module is specifically configured to:
receive a temporary identity reallocation request message sent by the mobility management network element, wherein the temporary identity reallocation request message carries a non-broadcast location area identifier and the dedicated core network assistance information of the UE, and the non-broadcast location area identifier is used to instruct the UE to re-initiate the access request.

31. The UE according to any one of claims 26 to 29, wherein the receiving module is specifically configured to:
receive a radio resource control RRC connection release message sent by the base station, wherein the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

32. The UE according to any one of claims 26 to 29, wherein the receiving module is specifically configured to:
receive a detach request message sent by the mobility management network element, wherein the detach request message carries a detach type "re-attach" and the dedicated core network assistance information of the UE, and the detach type "re-attach" is used to instruct the UE to re-initiate the access request.

33. The UE according to any one of claims 26 to 32, wherein the access request message comprises an attach request or a location update request.

34. The UE according to any one of claims 26 to 33, wherein the dedicated core network assistance information of the UE is a dedicated core network type of the mobility management network element or the subscribed usage type of the UE.

35. A mobility management network element, comprising:
a processor, configured to: obtain a subscribed usage type of user equipment UE; and determine dedicated core network assistance information of the UE based on the subscribed usage type of the UE; and
a transmitter, configured to: if the dedicated core network assistance information of the UE does not match a dedicated core network served by the mobility management network element, send a request message to the UE, wherein the request message is used to instruct the UE to re-initiate an access request, and the request message carries the dedicated core network assistance information of the UE.

36. The mobility management network element according to claim 35, wherein the processor is specifically configured to:
determine the dedicated core network assistance information of the UE based on the subscribed usage type of the UE and at least one of the following information: a mapping relationship that is configured by an operator and that is between a usage type of the UE and a dedicated core network, a locally configured operator policy, or context information of the UE.

37. The mobility management network element according to claim 35 or 36, wherein the transmitter is further configured to: if the UE is in idle mode, before sending the request message to the UE, send a paging message to the UE, so that the UE changes to connected mode.

38. The mobility management network element according to any one of claims 35 to 37, wherein the transmitter is specifically configured to:
send a temporary identity reallocation request message to the UE, wherein the temporary identity reallocation request message carries a non-broadcast location area identifier and the dedicated core network assistance information of the UE, and the non-broadcast location area identifier is used to instruct the UE to re-initiate the access request.

39. The mobility management network element according to any one of claims 35 to 37, wherein the transmitter is specifically configured to:
send a connection release command message to a serving base station of the UE, wherein the connection release command message carries a cause value and the dedicated core network assistance information of the UE, the connection release command message is used to instruct the base station to send the cause value and the dedicated core network assistance information of the UE in a radio resource control RRC connection release message to the UE, and the cause value is used to instruct the UE to re-initiate the access request.

40. The mobility management network element according to any one of claims 35 to 37, wherein the transmitter is specifically configured to:
send a detach request message to the UE, wherein the detach request message carries a detach type "re-attach" and the dedicated core network assistance information of the UE, and the detach type "re-attach" is used to instruct the UE to re-initiate the access request.

41. The mobility management network element according to any one of claims 35 to 40, wherein the access request re-initiated by the UE comprises an attach request or a location update request.

42. The mobility management network element according to any one of claims 35 to 41, wherein the dedicated core network assistance information of the UE comprises a dedicated core network type of the mobility management network element and/or the subscribed usage type of the UE.

43. User equipment UE, comprising:
a receiver, configured to receive a request message sent by a mobility management network element, wherein the request message is used to instruct the UE to re-initiate an access request, and the request message carries dedicated core network assistance information determined by the mobility management network element for the UE; and
a transmitter, configured to: send an access request message based on the request message, and send, to a serving base station of the UE, the dedicated core network assistance information in a radio resource control RRC connection establishment request message triggered by the access request message, wherein the dedicated core network assistance information is used by the base station to select a dedicated core network corresponding to the dedicated core network assistance information for the UE.

44. The UE according to claim 43, further comprising a memory and a processor; wherein the memory is configured to save the dedicated core network assistance information; and the processor is configured to associate the dedicated core network assistance information with a serving network of the UE.

45. The UE according to claim 43 or 44, wherein the dedicated core network assistance information is determined by the mobility management network element based on a subscribed usage type of the UE and at least one of the following information: a mapping relationship that is configured by an operator and that is between a usage type of the UE and a dedicated core network, a locally configured operator policy, or context information of the UE.

46. The UE according to any one of claims 43 to 45, wherein the receiver is further configured to:
receive a paging message sent by the mobility management network element, and send a paging response message by using the transmitter to connect to the mobility management network element.

47. The UE according to any one of claims 43 to 46, wherein the receiver is specifically configured to:
receive a temporary identity reallocation request message sent by the mobility management network element, wherein the temporary identity reallocation request message carries a non-broadcast location area identifier and the dedicated core network assistance information of the UE, and the non-broadcast location area identifier is used to instruct the UE to re-initiate the access request.

48. The UE according to any one of claims 43 to 46, wherein the receiver is specifically configured to:
receive a radio resource control RRC connection release message sent by the base station, wherein the RRC connection release message carries a cause value and the dedicated core network assistance information of the UE, the RRC connection release message is sent by the base station after the base station receives a connection release command message sent by the mobility management network element, the connection release command message carries the cause value and the dedicated core network assistance information of the UE, and the cause value is used to instruct the UE to re-initiate the access request.

49. The UE according to any one of claims 43 to 46, wherein the receiver is specifically configured to:
receive a detach request message sent by the mobility management network element, wherein the detach request message carries a detach type "re-attach" and the dedicated core network assistance information of the UE, and the detach type "re-attach" is used to instruct the UE to re-initiate the access request.

50. The UE according to any one of claims 43 to 49, wherein the access request message comprises an attach request or a location update request.

51. The UE according to any one of claims 43 to 50, wherein the dedicated core network assistance information of the UE is a dedicated core network type of the mobility management network element or the subscribed usage type of the UE.

52. A system for processing migration between dedicated core networks, comprising the mobility management network element according to any one of claims 18 to 25 and the user equipment UE according to any one of claims 26 to 34.

53. A system for processing migration between dedicated core networks, comprising the mobility management network element according to any one of claims 35 to 42 and the user equipment UE according to any one of claims 43 to 51.
